# EUROPÄISCHE PATENTSCHRIFT

(11) **EP 4 306 341 B1**
(45) Veröffentlichungstag und Bekanntmachung des Hinweises auf die Patenterteilung: **13.05.2026**
(21) Anmeldenummer: 23183987.9
(22) Anmeldetag: 06.07.2023
(51) Int. Cl.: B60D 1/06, B60D 1/30, B60D 1/62

(54) **ANHÄNGERSTABILISIERUNGSSYSTEM FÜR EINEN FAHRZEUGANHÄNGER MIT DREHZAHLSENSOR**
TRAILER STABILIZATION SYSTEM FOR A VEHICLE TRAILER WITH ROTATIONAL SPEED SENSOR
SYSTÈME DE STABILISATION DE REMORQUE POUR REMORQUE AVEC CAPTEUR DE VITESSE DE ROTATION

(30) Priorität: 11.07.2022 DE 202022103881 U
(43) Veröffentlichungstag der Anmeldung: 17.01.2024
(73) Patentinhaber: Knott GmbH, 83125 Eggstätt (DE); REICH GmbH Regel- und Sicherheitstechnik, 35713 Eschenburg (DE)
(72) Erfinder: STRASSER, Josef, 83257 Gstadt am Chiemsee (DE); Feichtner, Michael, 83209 Prien (DE)
(74) Vertreter: Flach Bauer & Partner Patentanwälte mbB

(56) Entgegenhaltungen:
- WO-A1-2018/219894
- DE-U1- 202021 102 632

## Beschreibung

Die Erfindung betrifft ein Anhängerstabilisierungssystem für einen Fahrzeuganhänger, insbesondere für einen Wohnwagen, Transport- oder Bootsanhänger, gemäß dem Oberbegriff der Ansprüche 1, 4 und 6.

Anhängerstabilisierungssysteme dieser Art dienen bekannterweise dazu, instabile Fahrzustände des Anhängers, insbesondere Schlingerbewegungen, zu vermeiden. Dies erfolgt dadurch, dass beim Auftreten von Schlingerbewegungen die Radbremsen des Fahrzeuganhängers zugespannt werden, so dass sich das Gespann streckt und damit den Schlingerbewegungen entgegengetreten wird.

Die Erfassung der Schlingerbewegungen erfolgt üblicherweise mittels Beschleunigungssensoren, die entsprechende Schlingerbewegungssignale an eine elektronische Steuereinrichtung zur Steuerung eines Bremsaktuators abgeben. Bei Bremsanlagen mit mechanischer Bremskraftübertragung wird die vom Bremsaktuator erzeugte Bremskraft dann beispielsweise mittels Seilzügen in der Form von Bowdenzügen auf die Radbremsen übertragen.

Es ist von großer Bedeutung, dass die auf die Radbremsen übertragene Bremskraft, d. h. die Bremsenzuspannkraft, nicht zu einem Blockieren der Anhängerräder führt. Bekanntermaßen können durch blockierende Anhängerräder keine ausreichenden Seitenführungskräfte mehr auf die Fahrbahn übertragen werden, wodurch sich die Schlingerbewegungen verstärken können und der Fahrzeuganhänger seitlich ausbrechen kann. Besonders kritisch ist hierbei, wenn das durch die Wankbewegungen des Fahrzeuganhängers stärker belastete Anhängerrad blockiert.

Das Blockieren eines Anhängerrads hängt stark vom Beladungszustand und damit vom Fahrgewicht des Anhängers sowie von der Fahrbahnbeschaffenheit bzw. deren Reibwert ab. Bei leichten, unbeladenen Anhängern und glatter Fahrbahn, beispielsweise bei Schnee und Eis, führen bereits relativ geringe Bremsenzuspannkräfte zu einem Blockieren der Anhängerräder. Bei schweren, beladenen Anhängern und griffiger Fahrbahn tritt ein Blockieren der Anhängerräder erst bei höheren Bremsenzuspannkräften auf.

Bei bekannten Anhängerstabilisierungssystemen von auflaufgebremsten Anhängern, die ohne Berücksichtigung des Beladungszustands arbeiten, ist die Bremsenzuspannkraft konstant und auf das Leergewicht des Anhängers abgestimmt. Der Einsatz derartiger Anhängerstabilisierungssysteme ist daher auf Anhänger mit relativ geringer Spreizung zwischen Leergewicht und zulässigem Gesamtgewicht beschränkt.

Aus der EP 3176042 A1 ist bereits ein Anhängerstabilisierungssystem bekannt, bei dem die Achslast des Anhängers gemessen wird, um die Bremsenzuspannkräfte an den Beladungszustand des Anhängers anzupassen. Dieses System berücksichtigt jedoch nicht die Reibverhältnisse zwischen Fahrbahn und Anhängerrädern, so dass auch dort das Blockieren eines Anhängerrads beim Eingriff des Stabilisierungssystems nicht immer zuverlässig verhindert werden kann.

Aus der DE 202021102632 U1 ist bereits ein Anhängerstabilisierungssystem gemäß dem Oberbegriff der Ansprüche 1, 4 und 6 bekannt. Dort wird eine im Bereich der Bremsnabe oder Bremstrommel angeordnete Impulserfassungseinrichtung mit einem Polrad und einem Magnetfeldsensor verwendet, um die Drehzahl eines Anhängerrads zu erfassen und den Bremsaktuator in Abhängigkeit der erfassten Drehzahlen zu steuern. Hierdurch kann auch das Blockieren eines Anhängerrads erfasst werden. Das Polrad ist dort mit Permanentmagneten bestückt, die an einem topfartigen Träger befestigt sind, der zwischen der Felge des Anhängerrads und einer äußeren Stirnfläche der Bremsnabe oder Bremstrommel befestigt werden kann. Nähere Angaben über die Art der Befestigung des Magnetfeldsensors werden dort nicht gemacht.

Zudem ist aus WO 2018/219 894 A1 ein Polrad bekannt, welches Teil eines Antiblockiersystems eines Kraftfahrzeus ist.

Der Erfindung liegt die Aufgabe zugrunde, ein Anhängerstabilisierungssystem der eingangs genannten Art zu schaffen, bei dem der mit dem Polrad zusammenwirkende Drehzahlsensor der Drehzahlerfassungseinrichtung auf möglichst einfache, platzsparende und vorzugsweise nachrüstbare Weise am Fahrzeuganhänger befestigt werden kann.

Diese Aufgabe wird erfindungsgemäß durch ein Anhängerstabilisierungssystem mit den Merkmalen der Ansprüche 1,4 und 6 gelöst. Vorteilhafte Ausführungsformen der Erfindung sind in den weiteren Ansprüchen beschrieben.

Das erfindungsgemäße Anhängerstabilisierungssystem umfasst eine Drehzahlerfassungseinrichtung zur Ermittlung der Drehzahl mindestens eines Anhängerrads, wobei die Drehzahlerfassungseinrichtung ein Polrad, das mit einer Bremsnabe oder Bremstrommel einer Radbremse des Fahrzeuganhängers verbunden ist, und mindestens einen mit dem Polrad zusammenwirkenden Drehzahlsensor umfasst. Weiterhin umfasst das Anhängerstabilisierungssystem eine mit der Drehzahlerfassungseinrichtung verbundene elektronische Steuereinrichtung zur Steuerung mindestens eines Bremsaktuators zum Erzeugen einer Bremskraft und zum Bremsen des mindestens einen Anhängerrads mittels der Radbremse in Abhängigkeit der erfassten Drehzahl des Anhängerrads.

Ferner ist beim erfindungsgemäßen Anhängerstabilisierungssystem gemäß Anspruch 1 der Drehzahlsensor an einem Sensorhalter befestigt, der an einem zur Lagerung der Bremsnabe oder Bremstrommel dienenden Achsstummel einer Anhängerachse befestigt ist.

Gemäß einer vorteilhaften Ausführungsform weist der Sensorhalter eine Klemmeinrichtung in der Form einer Spannschelle zum Umspannen des Achsstummels und zur Halterung des Sensorhalters am Achsstummel auf. Hierdurch kann der Sensorhalter auf sehr einfache, nachrüstbare und lösbare Weise in Nachbarschaft der Bremsnabe oder Bremstrommel befestigt werden. Zum Zusammenspannen der Spannschelle werden zweckmäßigerweise Spannmittel in der Form von Schrauben verwendet.

Vorteilhafterweise ist eine Hälfte der Spannschelle einteilig mit einem Ausleger verbunden, der sich von der Spannschelle zum Polrad erstreckt.

Beim erfindungsgemäßen Anhängerstabilisierungssystem gemäß Anspruch 4 ist der Drehzahlsensor an einem Sensorhalter befestigt, der an einem Seilzugeinführstutzen einer Bremsträgerplatte befestigt ist. Beispielsweise kann der Sensorhalter am Seilzugeinführstutzen festgeschweißt sein und sich von dort bis zum umlaufenden Ring des Polrads erstrecken, in dem sich die Aussparungen/Vertiefungen und Stege befinden.

Vorzugsweise umfasst der Seileinführstutzen eine an der Bremsträgerplatte befestigte erste Halteschale und eine mit der ersten Halteschale lösbar verbundene zweite Halteschale, wobei der Sensorhalter auf der lösbaren zweiten Halteschale befestigt ist.

Beim erfindungsgemäßen Anhängerstabilisierungssystem gemäß Anspruch 6 ist der Drehzahlsensor an einem Sensorhalter befestigt, der an einer Bremsträgerplatte im Bereich eines in der Bremsträgerplatte vorgesehenen Schaulochs derart befestigt, dass der Drehzahlsensor durch das Schauloch hindurch auf das Polrad gerichtet ist.

Die Erfindung wird nachfolgend anhand der Zeichnungen beispielhaft näher erläutert. Es zeigen:
- Figur 1:: eine Draufsicht auf ein Chassis eines Fahrzeuganhängers mit erfindungsgemäßem Anhängerstabilisierungssystem;
- Figur 2:: eine Ansicht schräg von unten auf den Aktuator und umgebende Komponenten;
- Figur 3:: eine teilweise freigeschnittene Ansicht von unten auf die in Figur 2 gezeigten Teile;
- Figur 4:: eine räumliche Darstellung einer Bremsnabe mit Polrad;
- Figur 5:: einen Längsschnitt durch die Bremsnabe von Figur 4;
- Figur 6:: die Einzelheit VI von Figur 5 in vergrößertem Maßstab;
- Figur 7:: einen Längsschnitt durch die Bremsnabe von Figur 4 in Alleinstellung;
- Figur 8:: die Einzelheit VIII von Figur 7 in vergrößertem Maßstab;
- Figur 9:: eine stirnseitige Ansicht des Polrads;
- Figur 10:: eine Seitenansicht des Polrads von Figur 9;
- Figur 11: die Einzelheit XI von Figur 10 in vergrößertem Maßstab;
- Figur 12:: eine räumliche Darstellung einer Bremsnabe mit einer zweiten Ausführungsform des erfindungsgemäßen Polrads;
- Figur 13:: die Einzelheit XIII von Figur 12 in vergrößertem Maßstab;
- Figur 14:: eine räumliche Darstellung eines Polrads mit einer dritten Ausführungsform des erfindungsgemäßen Polrads, wobei zusätzlich ein Radsensor dargestellt ist;
- Figur 15:: ein Anhängerrad mit einem Polrad, einer Bremsträgerplatte und einem Radsensor, der an einer auf einen Seilzugeinführstutzen aufgesetzten Haltekonsole befestigt ist;
- Figur 16:: eine stirnseitige Ansicht der Anordnung von Figur 15 ohne Reifen und Felge;
- Figur 17:: eine obere Hälfte des Seilzugeinführstutzens mit aufgesetzter Haltekonsole für den Radsensor;
- Figur 18:: eine stirnseitige Ansicht einer Bremsnabe mit Bremsträgerplatte, Polrad, Drehzahlsensor und Sensorhalter, der mittels einer Klemmeinrichtung an einem Achsstummel befestigt ist;
- Figur 19:: eine räumliche Darstellung der Anordnung von Figur 18 ohne Bremsträgerplatte und Achsstummel;
- Figur 20:: den Sensorhalter der Figuren 18 und 19 in Alleinstellung; und
- Figur 21:: ein Anhängerrad von der Seite der Bremsträgerplatte her, wobei der Drehzahlsensor im Bereich eines Schaulochs der Bremsträgerplatte befestigt ist.

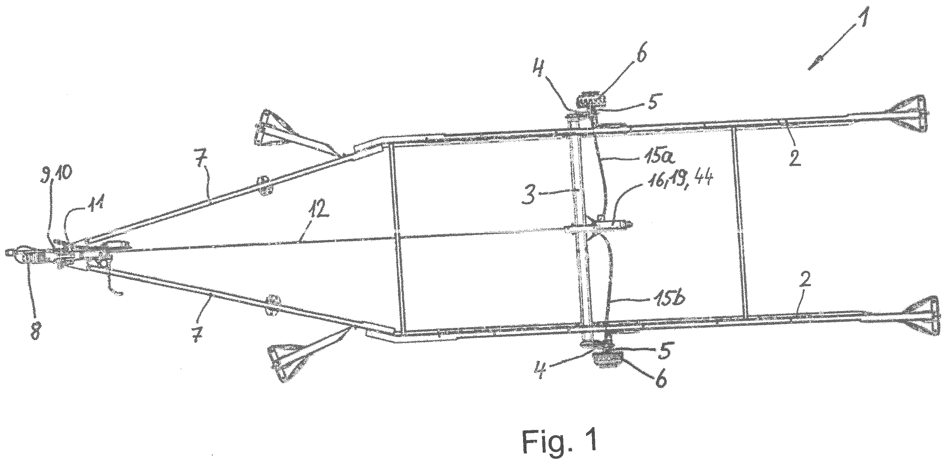

In Figur 1 ist ein Chassis 1 für einen auflaufgebremsten Fahrzeuganhänger, beispielsweise einen Wohnwagenanhänger, gezeigt.

Das Chassis 1 umfasst zwei seitliche Längsträger 2, die von einem quer verlaufenden Achsrohr 3 durchsetzt sind. Innerhalb des Achsrohrs 3 sind ein oder zwei Schwingwellen begrenzt drehbar und insbesondere mittels Gummischnüren gelagert. An den außenliegenden Enden der Schwingwelle(n) sind Schwinghebel 4 drehfest befestigt. An den Schwinghebeln 4 sind in bekannter Weise Achsstummel 5 befestigt, die zur Lagerung von Radbremsen 6 dienen. Die Radbremsen 6 sind im dargestellten Ausführungsbeispiel als Trommelbremsen ausgebildet, an denen in bekannter Weise Anhängerräder 29 befestigt werden.

Von den Längsträgern 2 erstrecken sich Zugholme 7 zum vorderen Endbereich des Fahrzeuganhängers, wo sich eine Zugkugelkupplung 8, eine Auflaufeinrichtung 9 einer Auflaufbremsanlage 10 und ein Handbremshebel 11 einer Feststellbremse befinden.

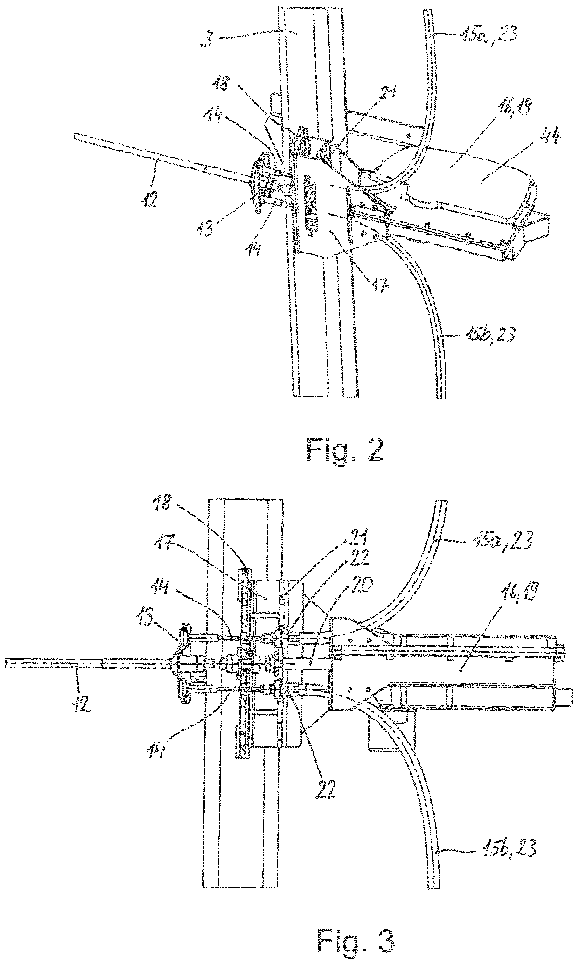

Die von der Auflaufeinrichtung 9 und dem Handbremshebel 11 erzeugte Bremskraft wird über eine mechanische Bremskraftübertragungseinrichtung auf die Radbremsen 6 übertragen. Diese mechanische Bremskraftübertragungseinrichtung umfasst ein zentrales Bremsgestänge 12, das an seinem vorderen Ende mit einem nicht näher dargestellten Übersetzungshebel der Auflaufbremsanlage 10 und mit seinem hinteren Ende mit einer Ausgleichswaage 13 verbunden ist, die in den Figuren 2 und 3 näher dargestellt ist. Die Ausgleichswaage 13 besteht zweckmäßigerweise aus einem biegesteifen Profilelement, das vom Bremsgestänge 12 mittig durchdrungen wird und von einer auf das Bremsgestänge 12 aufgeschraubten Mutter hintergriffen wird. An den beiden gegenüberliegenden Endbereichen der Ausgleichswaage 13 sind Seilzüge 14 von zwei Bowdenzügen 15a, 15b befestigt, die seitlich nach außen zu den Radbremsen 6 geführt sind. Die Seilzüge 14 sind in bekannter Weise mit den Radbremsen 6 derart verbunden, dass durch Ziehen an den Seilzügen 14 die Radbremsen 6 betätigt werden.

Zur Reduzierung von Schlingerbewegungen des Fahrzeuganhängers ist ein Anhängerstabilisierungssystem vorgesehen, das insbesondere in den Figuren 2 und 3 näher dargestellt ist. Dieses Anhängerstabilisierungssystem umfasst eine Zentraleinheit 16, die mittels einer Befestigungskonsole 17 an einer Lochplatte 18 des Achsrohrs 3 befestigt, insbesondere festgeschraubt ist. Die Lochplatte 18 erstreckt sich im gezeigten Ausführungsbeispiel vom Achsrohr 3 nach unten und ist mittig zwischen den Längsträgern 2 am Achsrohr 3 festgeschweißt.

Die Zentraleinheit 16 umfasst einen Aktuator 19 in der Form eines Elektromotors, der über Getriebeelemente auf eine Zugstange 20 (Figur 3) einwirkt, um diese im Fall von Schlingerbewegungen nach hinten, d.h. in Figur 3 nach rechts, zu ziehen. Das vordere Ende der Zugstange 20 ist mit einem verschiebbaren Seilhüllenwiderlager 21 fest verbunden, an dem die Enden 22 der Seilzughüllen 23 der Bowdenzüge 15a, 15b festgelegt sind. Das Seilhüllenwiderlager 21 ist im gezeigten Ausführungsbeispiel als steifes, im Querschnitt U-förmiges Profilelement ausgebildet. Die Seilzughüllen 23 erstrecken sich mit ihren Enden 22 durch Löcher des Seilhüllenwiderlagers 21 hindurch und werden dort mittels Schrauben festgelegt. Die Seilzüge 14 erstrecken sich weiter nach vorne durch Löcher in der Lochplatte 18 hindurch und können hierdurch an der Ausgleichswaage 13 festgelegt werden.

Das Anhängerstabilisierungssystem umfasst weiterhin einen nicht näher dargestellten Schlingerbewegungssensor, der ebenfalls in der Zentraleinheit 16 angeordnet sein kann und im Fall einer Schlingerbewegung des Fahrzeuganhängers entsprechende Schlingerbewegungssignale erzeugt. Bei einem derartigen Schlingerbewegungssensor kann es sich beispielsweise um einen Querbeschleunigungssensor oder um einen Giersensor handeln.

Eine ebenfalls in der Zentraleinheit 16 angeordnete elektronische Steuereinrichtung verarbeitet die vom Schlingerbewegungssensor erhaltenen Schlingerbewegungssignale und erzeugt daraus entsprechende Steuersignale für den Aktuator 19. Der Aktuator 19 betätigt dann die mechanische Bremskraftübertragungseinrichtung in Abhängigkeit der Steuersignale. Dies erfolgt dadurch, dass der Aktuator 19 beim Auftreten von Schlingerbewegungen die Zugstange 20 und damit über das Seilhüllenwiderlager 21 auch die Enden 22 der Seilzughüllen 23 nach hinten zieht, wodurch die Radbremsen 6 zugespannt werden. Die hierdurch bewirkte Bremsung des Fahrzeuganhängers bewirkt eine Streckung des Gespanns und reduziert die Schlingerbewegungen des Fahrzeuganhängers.

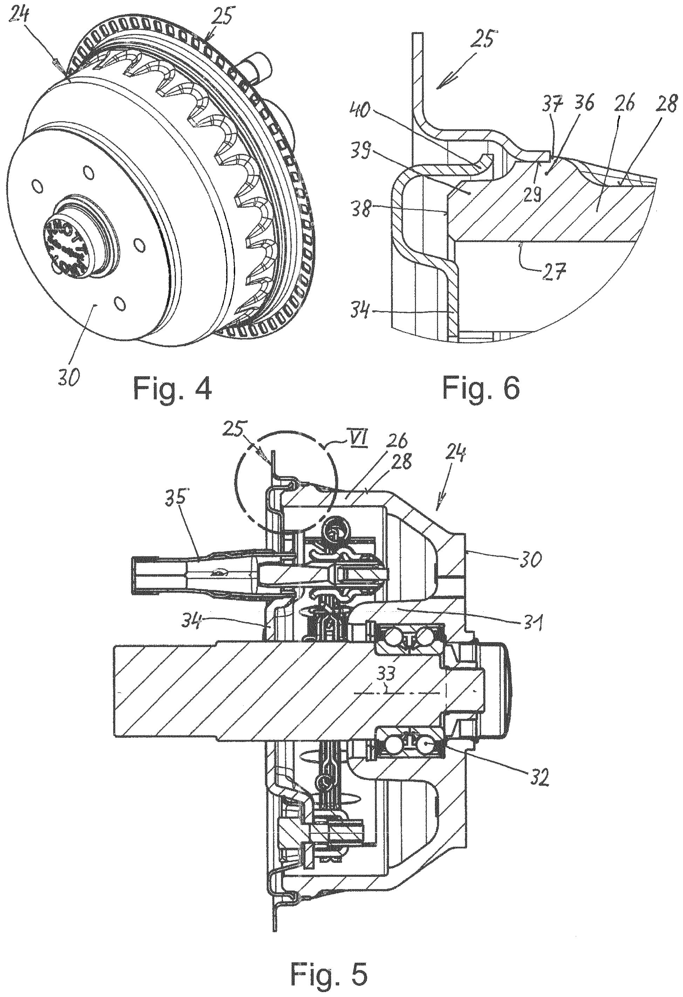

Die Figuren 4 und 5 zeigen eine räumliche Darstellung bzw. einen Längsschnitt einer Bremsnabe 24 mit einem Polrad 25 gemäß der Erfindung. In Figur 5 sind einige Teile, wie beispielsweise Bremsbeläge, der Übersichtlichkeit halber weggelassen.

Die Bremsnabe 24 ist als Trommelbremse ausgeführt. Die Bremsnabe 24 weist eine Umfangswand 26 mit einer inneren Umfangsfläche 27 und einer äußeren Umfangsfläche 28 auf. An der inneren Umfangsfläche 27 liegen bei einem Bremseingriff die nicht dargestellten Bremsbacken an. Ein Teilbereich der äußeren Umfangsfläche 28 ist als Montagefläche 29 zur Befestigung des Polrads 25 ausgebildet. Eine äußere Stirnwand 30 der Bremsnabe 30 dient in bekannter Weise zum Anlegen und Festschrauben einer nicht dargestellten Felge.

Von der äußeren Stirnwand 30 erstreckt sich ein hohlzylinderförmiger Nabenabschnitt 31 axial nach innen, an dem die Bremsnabe 24 über Lager 32 drehbar am Achsstummel 5 gelagert ist. Die Drehachse ist mit 33 bezeichnet.

Aus Figur 5 ist weiterhin eine stationäre Bremsträgerplatte 34 ersichtlich, an der in üblicher Weise die Bremsbeläge gehaltert und abgestützt sind. Weiterhin ist an der Bremsträgerplatte 34 ein Seilzugeinführstutzen 35 befestigt, durch den hindurch der Seilzug 14 zu einer im Inneren der Bremsnabe 24 angeordneten mechanischen Betätigungseinrichtung zum Betätigen der Bremsbacken geführt ist. Der Seilzugeinführstutzen 35 erstreckt sich über die Bremsträgerplatte 34 hinaus ein kurzes Stück axial in Richtung Anhängermitte.

Aus dem Figuren 6 bis 8 ist ersichtlich, dass die an der äußeren Umfangsfläche 28 der Bremsnabe 24 vorgesehene Montagefläche 29 eine konzentrische zylindrische Fläche ist, die relativ schmal ausgebildet ist, d. h. in axialer Richtung nur einen relativ kleinen Teil der äußeren Umfangsfläche 28 einnimmt. Vorzugsweise befindet sich die Montagefläche 29, wie gezeigt, auf einer umlaufenden radialen Erhebung 36 der Umfangswand 26, die sich radial nach außen über den übrigen Teil der äußeren Umfangsfläche 28 hinaus erstreckt. Die Montagefläche 29 ist vorzugsweise eine bearbeitete Fläche, die beispielsweise durch Bearbeitung auf einer Drehbank, durch Fräsbearbeitung oder durch Schleifen mit hoher Maßgenauigkeit hergestellt werden kann. Dies ist insbesondere dann von Vorteil, wenn, wie üblich, die Bremsnabe 24 aus einem Gußteil besteht.

Die Montagefläche 29 ist axial nach außen vorzugsweise durch einen radial vorstehenden Steg 37 begrenzt, der einen Axialanschlag für das Polrad 25 bildet. Auf diese Weise lässt sich das Polrad 25, wie in Figur 6 dargestellt, auf einfache Weise vom inneren Ende der Bremsnabe 24 her auf die Montagefläche 29 aufschieben, bis die Bremsnabe 24 am Steg 37 anschlägt. Eine genaue axiale Positionierung des Polrads 25 ist dadurch auf einfache Weise möglich.

Die Montagefläche 29 befindet sich beim gezeigten Ausführungsbeispiel ferner in derjenigen axialen Hälfte der Umfangswand 26, die an die innere Stirnfläche 38 und an einen umlaufenden Randbereich 39 der Bremsnabe 24 anschließt, über den sich ein Rand 40 der Bremsträgerplatte 34 mit Abstand überlappend erstreckt.

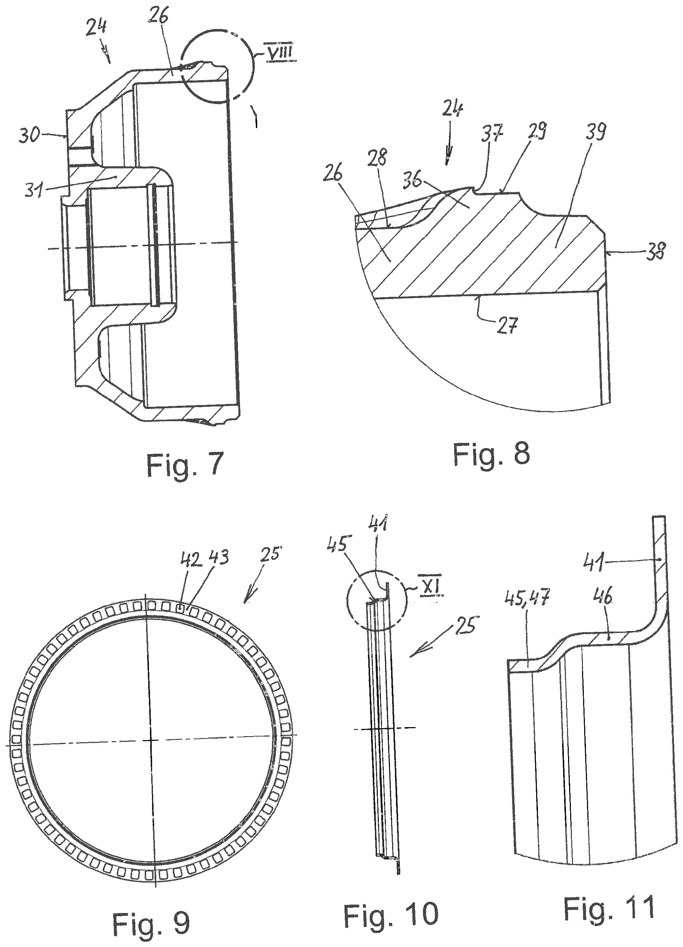

Die Figuren 9 und 10 zeigen das Polrad 25 in Alleinstellung, während Figur 11 die Einzelheit XI von Figur 10 in vergrößerter Darstellung zeigt. Das Polrad 25 dieses Ausführungsbeispiels ist als kreisringförmiges, tiefgezogenes Blechelement mit einem zumindest im wesentlichen L-förmigen Querschnitt ausgebildet. Im vertikalen Schenkel 41 des Polrads 25 sind eine Vielzahl von Aussparungen 42 vorzugsweise mit gleichem Abstand und regelmäßig über den gesamten Umfang des Polrads 25 verteilt angeordnet. Zwischen den Aussparungen 42 befinden sich Stege 43. Das sich zusammen mit der Bremsnabe 24 drehende Polrad 25 verursacht daher Magnetfeldänderungen, wenn die Aussparungen 42 und Stege 43 an einem in den Figuren 1 bis 11 nicht dargestellten Drehzahlsensor vorbeigeführt werden. Der Drehzahlsensor gibt aufgrund dieser Magnetfeldänderungen entsprechende Impulse an eine elektronische Steuereinrichtung 44 (Figur 1) ab, die in der Zentraleinheit 16 angeordnet sein kann. Hierdurch kann die Drehzahl des Anhängerrads bestimmt und eine Blockade des Anhängerrads erfasst werden.

Das Polrad 25 weist ferner einen geschlossen umlaufenden Befestigungskragen 25 auf, der sich zumindest überwiegend in horizontaler Richtung, d. h. konzentrisch zur Drehachse 33, erstreckt. Im gezeigten Ausführungsbeispiel hat der Befestigungskragen 25 einen gestuften Durchmesser. Der Durchmesser im freien Randbereich ist geringer als in einem daran anschließenden Axialabschnitt 46 und als Befestigungsrand 47 ausgebildet, dessen Innendurchmesser derart auf den Durchmesser der Montagefläche 29 abgestimmt ist, dass der Befestigungsrand 47 mit Presssitz auf die Montagefläche 29 der Bremsnabe 24 aufgepresst werden kann und dadurch fest auf der Bremsnabe 24 fixiert wird.

Der Axialabschnitt 46 des Befestigungkragens 45 hat einen derartigen Durchmesser, dass er sich mit radialem Abstand berührungsfrei über den Rand 40 der Bremsträgerplatte 34 erstreckt.

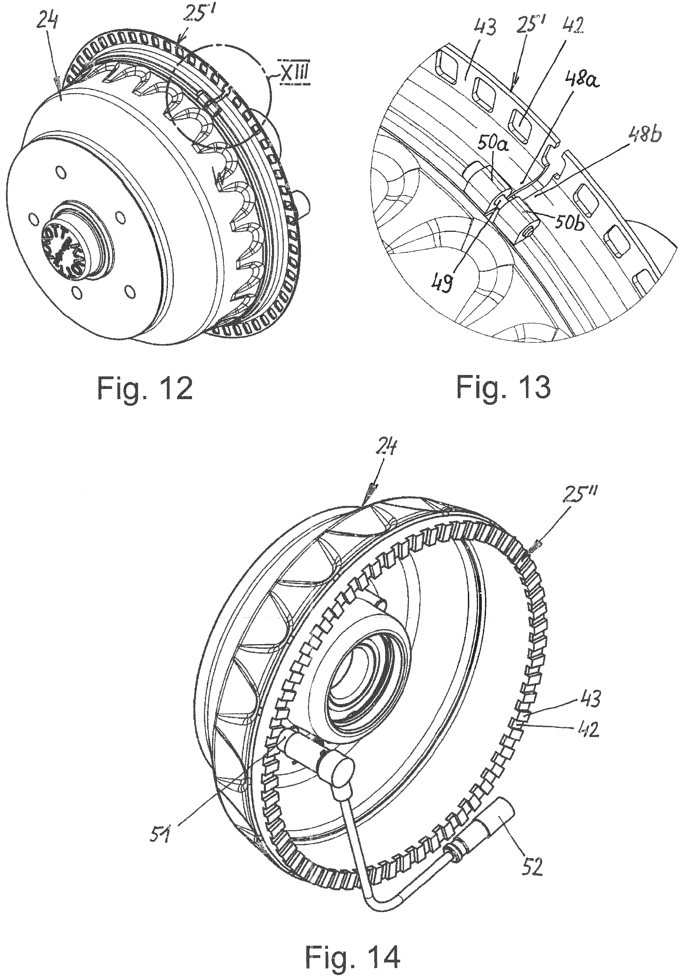

Die Figuren 12 und 13 zeigen eine zweite Ausführungsform eines erfindungsgemäßen Polrads 25'. Dieses Polrad 25' weist im Wesentlichen die gleiche Kontur wie das Polrad 25 der ersten Ausführungsform auf, so dass diesbezüglich auf die vorstehenden Ausführungen verwiesen wird. Im Unterschied zur ersten Ausführungsform ist das Polrad 25' jedoch nicht als geschlossen umlaufender Ring ausgebildet, sondern als ringförmige Spannschelle mit zwei beabstandeten Enden 48a, 48b, die mittels eines Spannmittels in Form einer Schraube 49 zusammengespannt werden können. Das Polrad 25' weist hierzu am Ende 48a eine Konsole 50a mit einem Durchgangsloch auf, durch die die Schraube 49 hindurchgeführt ist, und am anderen Ende 48b eine Konsole 50b mit einem Innengewinde, in das die Schraube 49 eingeschraubt werden kann.

Die Bremsnabe 24 dieser Ausführungsform kann wiederum gleich wie die Bremsnabe 24 der ersten Ausführungsform ausgebildet sein und weist insbesondere die vorzugsweise bearbeitete Montagefläche 29 der ersten Ausführungsform auf, auf die der Befestigungsrand 47 des Polrads 25' aufgesetzt werden kann. Im Unterschied zur ersten Ausführungsform kann das Polrad 25' jedoch zunächst mit einem gewissen radialen Spiel auf die Montagefläche 29 aufgesetzt werden. Durch anschließendes Einschrauben der Schraube 49 in die Konsole 50b wird das Polrad 25' dann auf der Montagefläche 29 festgeklemmt.

Figur 14 zeigt eine dritte Ausführungsform eines erfindungsgemäßen Polrads 25". Bei dieser Ausführungsform ist das Polrad 25'' an der inneren Stirnfläche der Bremsnabe 24 ausgebildet. Die Aussparungen 42 und Stege 43 bilden dort einen stirnseitigen Zahnkranz. Die Herstellung dieses Polrads 25" kann beispielsweise durch eine entsprechende Fräsbearbeitung der innenseitigen Stirnfläche 38 der Bremsnabe 24 erfolgen.

Aus Figur 14 ist weiterhin ein Drehzahlsensor 51 ersichtlich, der in einer Richtung, die parallel zur Drehachse 33 der Bremsnabe 24 ist, auf das Polrad 25'' ausgerichtet ist. Über eine Steckkupplung 52 kann der Drehzahlsensor 51 mit einer elektrischen Anschlussleitung verbunden werden.

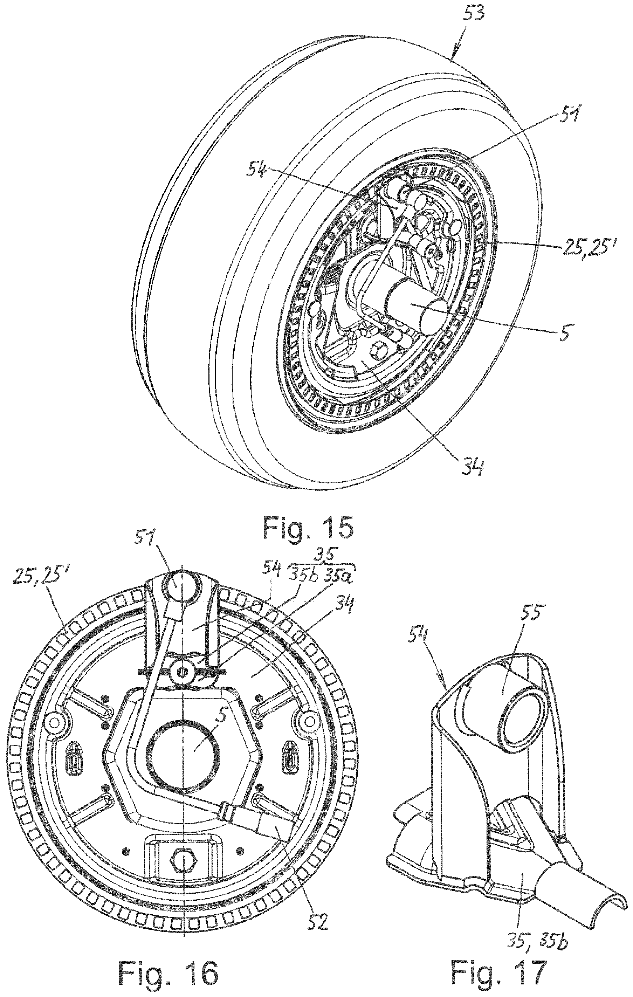

Im Folgenden werden anhand der Figuren 15 bis 21 verschiedene nachrüstbare Halterungen für den Drehzahlsensor 51 beschrieben.

Figur 15 zeigt eine räumliche Darstellung eines Anhängerrads 53 mit Blickrichtung von der Innenseite des Fahrzeuganhängers her, wobei der Achsstummel 5, die Bremsträgerplatte 34 und der Drehzahlsensor 51 dargestellt sind. Figur 16 zeigt eine stirnseitige Ansicht des Ausführungsbeispiels von Figur 15 ohne Anhängerrad 53, Figur 17 zeigt die Halterung für den Drehzahlsensor 51 und die obere Hälfte des Seilzugeinführstutzens 35 in Alleinstellung.

Bei diesem Ausführungsbeispiel ist der Drehzahlsensor 51 an einem Sensorhalter 54 in der Form einer Haltekonsole befestigt, die sich vom Seilzugeinführstutzen 35 radial nach außen bis zum Polrad 25, 25' erstreckt. Vorzugsweise ist der Sensorhalter 54 auf einer oberen Halteschale 35b des Seilzugeinführstutzens 35 festgeschweißt. Diese obere Halteschale 35b kann als Steckteil ausgebildet und mit einer unteren Halteschale 35a des Seilzugeinführstutzens 35, die an der Bremsträgerplatte 34 festgeschweißt ist, abnehmbar verbunden sein. Wie insbesondere aus Figur 17 ersichtlich, ist am radial äußeren Ende des Sensorhalters 54 eine Befestigungshülse 55 angeordnet, in die der Drehzahlsensor 51 eingesteckt werden kann.

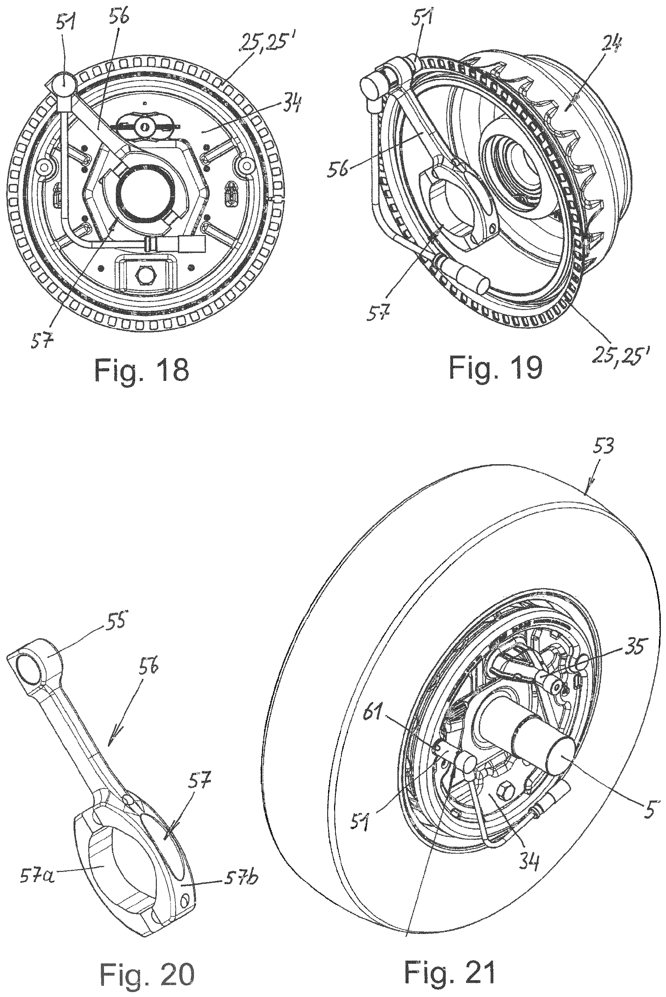

Die Figuren 18 bis 20 zeigen ein zweites Ausführungsbeispiel eines Sensorhalters. Bei diesem Ausführungsbeispiel ist der Drehzahlsensor 51 an einem Sensorhalter 56 befestigt, der auf dem Achsstummel 5 festgeklemmt wird. Hierzu weist der Sensorhalter 56 eine Klemmeinrichtung in der Form einer Spannschelle 57 auf, die aus zwei Hälften 57a, 57b besteht. Die Hälften 57a, 57b können mittels Schrauben 58 über dem Achsstummel 5 zusammengezogen und dadurch auf diesem festgeklemmt werden.

Die Hälfte 57a der Spannschelle 57 ist einteilig mit einem stabförmigen Ausleger 59 verbunden, der sich radial nach außen bis zum Polrad 25, 25' erstreckt. Am radial äußeren Ende des Auslegers 59 ist die Befestigungshülse 55 zum Einführen des Drehzahlsensors 51 angeordnet.

Figur 21 zeigt ein drittes Ausführungsbeispiel für einen Sensorhalter. Der dortige Sensorhalter 60 ist in oder an einem Schauloch 61 der Bremsträgerplatte 34 derart befestigt, dass der Drehzahlsensor 51 durch das Schauloch 61 hindurch auf die Aussparungen 42 und Stege 43 des Polrads, beispielsweise des Polrads 25" von Figur 14, gerichtet ist. Derartige Schaulöcher 61 werden üblicherweise zur Überprüfung der Dicke der Bremsbeläge verwendet. Diese Ausführungsform eines Sensorhalters 60 ist somit bei solchen Polrädern einsetzbar, bei denen die Aussparungen 42 und Stege 43 auf einem Kreis liegen, dessen Durchmesser geringer als der Außendurchmesser der Bremsträgerplatte 34 ist.

## Patentansprüche

1. Anhängerstabilisierungssystem für einen Fahrzeuganhänger, umfassend
- eine Drehzahlerfassungseinrichtung zur Ermittlung der Drehzahl mindestens eines Anhängerrads (53), wobei die Drehzahlerfassungseinrichtung ein Polrad (25, 25', 25"), das mit einer Bremsnabe (24) oder Bremstrommel einer Radbremse des Fahrzeuganhängers verbunden ist, und mindestens einen mit dem Polrad (25, 25', 25") zusammenwirkenden Drehzahlsensor (51) umfasst,
- eine mit der Drehzahlerfassungseinrichtung verbundene elektronische Steuereinrichtung (44) zur Steuerung mindestens eines Bremsaktuators (19) zum Erzeugen einer Bremskraft und zum Bremsen des mindestens einen Anhängerrads (53) mittels der Radbremse in Abhängigkeit der erfassten Drehzahl des Anhängerrads (53),
**dadurch gekennzeichnet, dass** der Drehzahlsensor (51) an einem Sensorhalter (56) befestigt ist, der an einem zur Lagerung der Bremsnabe (24) oder Bremstrommel dienenden Achsstummel (5) einer Anhängerachse befestigt ist, und dadurch dass
das Polrad einen im wesentlichen L-förmigen Querschnitt aufweist, wobei
in einem vertikalen Schenkel (41) des Polrads (25) eine Vielzahl von Aussparungen (42) angeordnet sind, wobei
sich zwischen den Aussparungen (42) Stege (43) befinden, wobei
die Aussparungen (42) und Stege (43) relativ zum Drehzahlsensor so angeordnet sind, dass sie an dem Drehzahlsensor vorbeigeführt werden und dort Magnetfeldänderungen bewirken.

2. Anhängerstabilisierungssystem nach Anspruch 1, **dadurch gekennzeichnet, dass** der Sensorhalter (56) eine Klemmeinrichtung in der Form einer Spannschelle (57) zum Umspannen des Achsstummels (5) und zur Halterung des Sensorhalters (56) am Achsstummel (5) aufweist.

3. Anhängerstabilisierungssystem nach Anspruch 2, **dadurch gekennzeichnet, dass** eine Hälfte (57b) der Spannschelle (57) einteilig mit einem Ausleger (59) verbunden ist, der sich von der Spannschelle (57) zum Polrad (25, 25', 25'') erstreckt.

4. Anhängerstabilisierungssystem für einen Fahrzeuganhänger, umfassend
- eine Drehzahlerfassungseinrichtung zur Ermittlung der Drehzahl mindestens eines Anhängerrads (53), wobei die Drehzahlerfassungseinrichtung ein Polrad (25, 25', 25"), das mit einer Bremsnabe (24) oder Bremstrommel einer Radbremse des Fahrzeuganhängers verbunden ist, und mindestens einen mit dem Polrad (25, 25', 25") zusammenwirkenden Drehzahlsensor (51) umfasst,
- eine mit der Drehzahlerfassungseinrichtung verbundene elektronische Steuereinrichtung (44) zur Steuerung mindestens eines Bremsaktuators (19) zum Erzeugen einer Bremskraft und zum Bremsen des mindestens einen Anhängerrads (53) mittels der Radbremse in Abhängigkeit der erfassten Drehzahl des Anhängerrads (53),
**dadurch gekennzeichnet, dass** der Drehzahlsensor (51) an einem Sensorhalter (54) befestigt ist, der an einem Seilzugeinführstutzen (35) einer Bremsträgerplatte (34) befestigt ist, und dadurch dass
das Polrad einen im wesentlichen L-förmigen Querschnitt aufweist, wobei
in einem vertikalen Schenkel (41) des Polrads (25) eine Vielzahl von Aussparungen (42) angeordnet sind, wobei
sich zwischen den Aussparungen (42) Stege (43) befinden, wobei
die Aussparungen (42) und Stege (43) relativ zum Drehzahlsensor so angeordnet sind, dass sie an dem Drehzahlsensor vorbeigeführt werden und dort Magnetfeldänderungen bewirken.

5. Anhängerstabilisierungssystem nach Anspruch 4, **dadurch gekennzeichnet, dass** der Seileinführstutzen (35) eine an der Bremsträgerplatte (34) befestigte erste Halteschale (35a) und eine mit der ersten Halteschale (35a) lösbar verbundene zweite Halteschale (35b) umfasst, wobei der Sensorhalter (54) auf der lösbaren zweiten Halteschale (35b) befestigt ist.

6. Anhängerstabilisierungssystem für einen Fahrzeuganhänger, umfassend
- eine Drehzahlerfassungseinrichtung zur Ermittlung der Drehzahl mindestens eines Anhängerrads (53), wobei die Drehzahlerfassungseinrichtung ein Polrad (25, 25', 25"), das mit einer Bremsnabe (24) oder Bremstrommel einer Radbremse des Fahrzeuganhängers verbunden ist, und mindestens einen mit dem Polrad (25, 25', 25") zusammenwirkenden Drehzahlsensor (51) umfasst,
- eine mit der Drehzahlerfassungseinrichtung verbundene elektronische Steuereinrichtung (44) zur Steuerung mindestens eines Bremsaktuators (19) zum Erzeugen einer Bremskraft und zum Bremsen des mindestens einen Anhängerrads (53) mittels der Radbremse in Abhängigkeit der erfassten Drehzahl des Anhängerrads (53),
**dadurch gekennzeichnet, dass** der Drehzahlsensor (51) an einem Sensorhalter (60) befestigt ist, der an einer Bremsträgerplatte (34) im Bereich eines in der Bremsträgerplatte (34) vorgesehenen Schaulochs (61) derart befestigt ist, dass der Drehzahlsensor (51) durch das Schauloch (61) hindurch auf das Polrad (25, 25', 25") gerichtet ist, und dadurch dass
das Polrad einen im wesentlichen L-förmigen Querschnitt aufweist, wobei
in einem vertikalen Schenkel (41) des Polrads (25) eine Vielzahl von Aussparungen (42) angeordnet sind, wobei
sich zwischen den Aussparungen (42) Stege (43) befinden, wobei
die Aussparungen (42) und Stege (43) relativ zum Drehzahlsensor so angeordnet sind, dass sie an dem Drehzahlsensor vorbeigeführt werden und dort Magnetfeldänderungen bewirken.

## Claims

1. Trailer stabilisation system for a vehicle trailer, comprising
- a rotational speed detection device for determining the rotational speed of at least one trailer wheel (53), wherein the rotational speed detection device comprises a pole wheel (25, 25', 25"), which is connected to a brake hub (24) or brake drum of a wheel brake of the vehicle trailer, and at least one rotational speed sensor (51) that interacts with the pole wheel (25, 25', 25"),
- an electronic controller (44), which is connected to the rotational speed detection device, for controlling at least one brake actuator (19) to produce a brake force and to brake the at least one trailer wheel (53) by means of the wheel brake as a function of the detected rotational speed of the trailer wheel (53),
**characterised in that** the rotational speed sensor (51) is attached to a sensor holder (56), which is attached to a stub axle (5) of a trailer axle, said stub axle (5) serving to mount the brake hub (24) or brake drum, and **in that** the pole wheel has a substantially L-shaped cross-section,
wherein a plurality of depressions (42) are arranged in a vertical limb (41) of the pole wheel (25), wherein connecting bars (43) are located between the depressions (42),
wherein the depressions (42) and connecting bars (43) are arranged relative to the rotational speed sensor such that they are led past the rotational speed sensor and cause changes in the magnetic field there.

2. Trailer stabilisation system according to claim 1, **characterised in that** the sensor holder (56) has a clamping device in the form of a clamp (57) for encompassing the stub axle (5) and for retaining the sensor holder (56) on the stub axle (5).

3. Trailer stabilisation system according to claim 2, **characterised in that** one half (57b) of the clamp (57) is integrally connected to an arm (59), which extends from the clamp (57) to the pole wheel (25, 25', 25").

4. Trailer stabilisation system for a vehicle trailer, comprising
- a rotational speed detection device for determining the rotational speed of at least one trailer wheel (53), wherein the rotational speed detection device comprises a pole wheel (25, 25', 25"), which is connected a brake hub (24) or brake drum of a wheel brake of the vehicle trailer, and at least one rotational speed sensor that interacts with the pole wheel (25, 25', 25"),
- an electronic controller (44), which is connected to the rotational speed detection device, for controlling at least one brake actuator (19) to produce a brake force and to brake the at least one trailer wheel (53) by means of the wheel brake as a function of the detected rotational speed of the trailer wheel (53),
**characterised in that** the rotational speed sensor (51) is attached to a sensor holder (54) which is attached to a cable insertion fitting (35) of a brake carrier plate (34),
and **in that** the pole wheel has a substantially L-shaped cross-section,
wherein a plurality of depressions (42) are arranged in a vertical limb (41) of the pole wheel (25),
wherein connecting bars (43) are located between the depressions (42),
wherein the depressions (42) and connecting bars (43) are arranged relative to the rotational speed sensor such that they are led past the rotational speed sensor and cause changes in the magnetic field there.

5. Trailer stabilisation system according to claim 4, **characterised in that** the cable insertion fitting (35) has a first holding shell (35a), which is attached to the brake carrier plate (34), and a second holding shell (35b), which is detachably connected to the first holding shell (35a), wherein the sensor holder (54) is attached to the detachable second holding shell (35b).

6. Trailer stabilisation system for a vehicle trailer, comprising
- a rotational speed detecting device for determining the rotational speed of at least one trailer wheel (53), wherein the rotational speed detection device comprises a pole wheel (25, 25', 25"), which is connected to the brake hub (24) or brake drum of a wheel brake of the vehicle trailer, and at least one rotational speed sensor (51) that interacts with the pole wheel (25, 25', 25"),
- an electronic controller (44), which connected to the rotational speed detection device, for controlling at least one brake actuator (19) to produce a brake force and to brake the at least one trailer wheel (53) by means of the wheel brake as a function of the detected rotational speed of the trailer wheel (53),
**characterised in that** the rotational speed sensor (51) is attached to a sensor holder (60), which is attached to a brake carrier plate (34) in the region of a viewing hole (61), provided in the brake carrier plate (34), in such a way that the rotational speed sensor (51) is directed through the viewing hole (61) towards the pole wheel (25, 25', 25"),
and **in that** the pole wheel has a substantially L-shaped cross-section,
wherein a plurality of depressions (42) are arranged in a vertical limb (41) of the pole wheel (25),
wherein connecting bars (43) are located between the depressions (42),
wherein the depressions (42) and connecting bars (43) are arranged relative to the rotational speed sensor such that they are led past the rotational speed sensor and cause changes in the magnetic field there.

## Revendications

1. Système de stabilisation de remorque destiné à une remorque de véhicule, comprenant :
- un dispositif de détection de vitesse permettant de déterminer la vitesse de rotation d'au moins une roue de remorque (53), ledit dispositif de détection de vitesse comprenant une roue magnétique (25, 25', 25") reliée à un moyeu de frein (24) ou à un tambour de frein d'un frein de roue de la remorque, et au moins un capteur de vitesse (51) coopérant avec la roue magnétique (25, 25', 25"),
- un dispositif de commande électronique (44) relié au dispositif de détection de vitesse pour commander au moins un actionneur de frein (19) afin de générer une force de freinage et de freiner l'au moins une roue de remorque (53) au moyen du frein de roue en fonction de la vitesse de la roue de remorque (53) détectée,
**caractérisé en ce que** le capteur de vitesse (51) est fixé à un support de capteur (56) lui-même fixé à une fusée (5) d'un essieu de remorque servant à supporter le moyeu de frein (24) ou le tambour de frein, et **en ce que**
la roue magnétique présente une section transversale sensiblement en forme de L ;
une pluralité d'évidements (42) étant agencés dans une branche verticale (41) de la roue magnétique (25),
des nervures (43) étant présentes entre les évidements (42),
les évidements (42) et les nervures (43) étant agencés par rapport au capteur de vitesse de manière à passer devant le capteur de vitesse et à y provoquer des changements de champ magnétique.

2. Système de stabilisation de remorque selon la revendication 1, **caractérisé en ce que** le support de capteur (56) présente un dispositif de serrage sous la forme d'un collier de serrage (57) permettant de serrer circonférentiellement la fusée (5) et de maintenir le support de capteur (56) sur la fusée (5).

3. Système de stabilisation de remorque selon la revendication 2, **caractérisé en ce qu'**une moitié (57b) du collier de serrage (57) est solidaire d'un bras (59) qui s'étend du collier de serrage (57) jusqu'à la roue magnétique (25, 25', 25").

4. Système de stabilisation de remorque destiné à une remorque de véhicule, comprenant :
- un dispositif de détection de vitesse permettant de déterminer la vitesse de rotation d'au moins une roue de remorque (53), ledit dispositif de détection de vitesse comprenant une roue magnétique (25, 25', 25") reliée à un moyeu de frein (24) ou à un tambour de frein d'un frein de roue de la remorque, et au moins un capteur de vitesse (51) coopérant avec la roue magnétique (25, 25', 25"),
- un dispositif de commande électronique (44) relié au dispositif de détection de vitesse pour commander au moins un actionneur de frein (19) afin de générer une force de freinage et de freiner l'au moins une roue de remorque (53) au moyen du frein de roue en fonction de la vitesse de la roue de remorque (53) détectée,
**caractérisé en ce que** le capteur de vitesse (51) est fixé à un support de capteur (54) lui-même fixé à un manchon d'insertion de câble (35) d'une plaque de support de frein (34), et **en ce que**
la roue magnétique présente une section transversale sensiblement en forme de L ;
une pluralité d'évidements (42) étant agencés dans une branche verticale (41) de la roue magnétique (25),
des nervures (43) étant présentes entre les évidements (42),
les évidements (42) et les nervures (43) étant agencés par rapport au capteur de vitesse de manière à passer devant le capteur de vitesse et à y provoquer des changements de champ magnétique.

5. Système de stabilisation de remorque selon la revendication 4, **caractérisé en ce que** le manchon d'insertion de câble (35) comprend une première coque de retenue (35a) fixée à la plaque de support de frein (34) et une deuxième coque de retenue (35b) reliée de manière amovible à la première coque de retenue (35a), le support de capteur (54) étant fixé à ladite deuxième coque de retenue (35b) amovible.

6. Système de stabilisation de remorque destiné à une remorque de véhicule, comprenant :
- un dispositif de détection de vitesse permettant de déterminer la vitesse de rotation d'au moins une roue de remorque (53), ledit dispositif de détection de vitesse comprenant une roue magnétique (25, 25', 25") reliée à un moyeu de frein (24) ou à un tambour de frein d'un frein de roue de la remorque, et au moins un capteur de vitesse (51) coopérant avec la roue magnétique (25, 25', 25"),
- un dispositif de commande électronique (44) relié au dispositif de détection de vitesse pour commander au moins un actionneur de frein (19) afin de générer une force de freinage et de freiner l'au moins une roue de remorque (53) au moyen du frein de roue en fonction de la vitesse de la roue de remorque (53) détectée,
**caractérisé en ce que** le capteur de vitesse (51) est fixé à un support de capteur (60), lui-même fixé à une plaque de support de frein (34) à proximité d'un trou d'inspection (61) prévu dans ladite plaque de support de frein (34), de telle façon que le capteur de vitesse (51) est dirigé vers la roue magnétique (25, 25', 25") à travers le trou d'inspection (61), et **en ce que**
la roue magnétique présente une section transversale sensiblement en forme de L ;
une pluralité d'évidements (42) étant agencés dans une branche verticale (41) de la roue magnétique (25),
des nervures (43) étant présentes entre les évidements (42),
les évidements (42) et les nervures (43) étant agencés par rapport au capteur de vitesse de manière à passer devant le capteur de vitesse et à y provoquer des changements de champ magnétique.
